# EUROPÄISCHE PATENTSCHRIFT

(11) **EP 1 029 741 B1**
(45) Veröffentlichungstag und Bekanntmachung des Hinweises auf die Patenterteilung: **31.08.2005**
(21) Anmeldenummer: 99125595.1
(22) Anmeldetag: 22.12.1999
(51) Int. Cl.: B60R 11/02, B60R 16/06, H05F 3/00

(54) **Für ein Kraftfahrzeug bestimmtes Einbaugerät**
Built-in apparatus for a motor vehicle
Appareil à encastrer pour un véhicule motorisé

(30) Priorität: 13.02.1999 DE 19906131
(43) Veröffentlichungstag der Anmeldung: 23.08.2000
(73) Patentinhaber: SIEMENS AKTIENGESELLSCHAFT, 80333 München (DE)
(72) Erfinder: Schittenhelm, Bernd, 35580 Wetzlar-Nauborn (DE)

(56) Entgegenhaltungen:
- EP-A- 0 558 331
- EP-A- 0 905 913
- WO-A-98/39785
- US-A- 5 312 263

## Beschreibung

Die Erfindung betrifft ein für ein Kraftfahrzeug bestimmtes Einbaugerät, insbesondere Autoradio, mit einem Gerätegehäuse und einer Bedienelemente aufweisenden Gerätefront.

Solche Einbaugeräte sind zumeist in modernen Kraftfahrzeugen in unterschiedlichen Ausführungen anzutreffen. Die größte Verbreitung hat dabei das Autoradio gefunden, welches bereits bei einem Großteil der Neufahrzeuge ab Werk eingebaut wird. Auch eine spätere Nachrüstung eines solchen Einbaugerätes ist dank eines hierfür bereits entsprechend vorbereiteten Schachtes problemlos möglich.

Als problematisch erweist sich bei der Vielzahl der elektronischen Bauelemente die elektrostatische Aufladung der Kraftfahrzeuginsassen, die zu unerwünschten Entladungserscheinungen und dadurch zu Schäden an empfindlichen elektrischen und elektronischen Bauteilen des Einbaugerätes führen kann. Dies tritt vor allem bei einer unmittelbaren Berührung des Einbaugerätes durch Betätigung der Bedienelemente, aber auch bei indirekter Berührung, beispielsweise durch Einlegen eines Tonträgers in das Einbaugerät, auf.

Um solchen Schäden vorzubeugen wurde bisher versucht, die Gerätefront des Einbaugerätes aus einem dicken isolierenden Kunststoffmaterial herzustellen, um so einen ausreichenden elektrostatischen Durchschlagschutz zu erreichen. Nachteilig wirkt sich dabei jedoch aus, dass die gestiegenen Anforderungen auf diesem Wege nicht mehr zuverlässig erfüllt werden können. Hinzu kommt, dass die Gerätefront moderner Einbaugeräte aus designtechnischen Überlegungen, vor allem aber wegen des erhöhten Platzbedarfs möglichst dünn ausgeführt werden muss.

Ein Einbaugerät gemäss dem Oberbegriff des Anspruchs 1 ist aus der EP 0 558 331 A bekannt.

Der Erfindung liegt daher das Problem zugrunde, ein Einbaugerät der eingangs genannten Art so zu gestalten, dass ein wirksamer Schutz des Einbaugerätes vor Schäden durch von außen einwirkende elektrostatische Entladung unabhängig von der Gestaltung der Gerätefront erreicht wird.

Dieses Problem wird durch die Merkmale des Anspruchs 1 gelöst. Die Ableitung der von außen einwirkenden elektrostatischen Ladung erfolgt dabei nach dem Prinzip des Faradayschen-Käfigs, wobei die von einem Benutzer auf das Einbaugerät übertragene Ladung über das Gehäuse des Einbaugerätes zuverlässig abgeleitet und dadurch eine Beschädigung der elektrischen Bauteile des Einbaugerätes verhindert werden kann. Die Gerätefront kann dadurch gegenüber bekannten Geräten wesentlich dünner ausgeführt werden, so dass bei dem erfindungsgemäßen Einbaugerät für die Bauelemente mehr Platz nutzbar ist. Zugleich können die negativen Einflüsse durch Störeinstrahlung sowie Störabstrahlung durch die erfindungsgemäße Zwischenschicht wesentlich verbessert werden.

Besonders vorteilhaft ist dabei eine Weiterbildung der Erfindung, bei der die Zwischenschicht ein Formteil ist. Die Montage des Einbaugerätes lässt sich dadurch erheblich vereinfachen. Dabei kann das Formteil zwischen der Gerätefront und dem Gehäuse eingelegt und gemeinsam mit diesem montiert werden. Zugleich lassen sich Bereiche unterschiedlicher Stärke erzeugen und dadurch die Funktionalität bei unterschiedlichen Anwendungen weiter verbessern.

Eine andere besonders vorteilhafte Weiterbildung ist dadurch gegeben, dass die Zwischenschicht eine Folie hat. Durch die flexiblen Eigenschaften der Folie lässt sich diese zwischen der Gerätefront und dem Gehäuse optimal einpassen, wobei eine zuverlässige Kontaktierung mühelos erreicht werden kann. Weiterhin kann die Folie äußerst dünn ausgeführt sein und dadurch beispielsweise auch bei vorhandenen Einbaugeräten nachgerüstet werden.

Hierzu könnte die Folie als Metallfolie ausgeführt sein. Eine besonders günstige Weiterbildung der Erfindung ist hingegen dadurch gegeben, dass die Folie eine mit einer elektrisch leitenden Beschichtung versehene Kunststoffolie ist. Diese lässt sich einerseits einfach herstellen und montieren, andererseits lässt sich in einfacher Weise eine einseitige Isolierung erreichen. Dadurch können Kurzschlüsse, insbesondere aufgrund unsachgemäßer Montage der Folie, wirkungsvoll verhindert und dadurch die Betriebssicherheit erhöht werden. Ebenso denkbar ist auch die Verwendung einer Metallfolie, die eine isolierende Beschichtung trägt.

Eine andere besonders vorteilhafte Ausführungsform der Erfindung ist dann gegeben, wenn die an der Gerätefront angeordneten Bedienelemente zur mechanischen Übertragung der Betätigungskraft auf elektrische Bauelemente, die an dem Gehäuse angeordnet sind, ausgeführt sind. Dadurch kann die Gerätefront des Einbaugerätes ausschließlich mit mechanischen Bauelementen ausgestattet sein, die hierzu aus einem isolierenden Material hergestellt sind. Die elektrische Kontaktierung erfolgt dabei mittels der in einem rückwärtigen Bereich des Einbaugerätes angeordneten, elektrischen Bauelemente, wobei die Zwischenschicht zwischen den elektrischen Bauelementen und der isolierten Gerätefront angeordnet ist. Dadurch entfallen solche elektrisch leitenden Bauelemente, die von der Gerätefront bis in das Innere des Gehäuses hineinführen, so dass sich der so erzielbare, elektrische Durchschlagschutz weiter verbessern lässt.

Bei einer anderen Ausführungsform der Erfindung sind besonders günstige Ergebnisse erreichbar, indem das Einbaugerät eine mit einer Abdeckung verschließbare Einführöffnung für Informationsträger hat, wobei die Abdeckung rückseitig mit einer elektrisch leitenden Zwischenschicht versehen ist. Hierdurch kann auch im Bereich der Einführöffnung eine zuverlässige Ableitung der Ladung über das Gehäuse erreicht und gleichzeitig ein unerwünschter Durchschlag der Ladung mittels des Informationsträgers auf elektrische Bauelemente im Inneren des Einbaugerätes verhindert werden. Der Informationsträger kann hierzu beispielsweise als Tonträger, insbesondere eine CD oder eine Kassette, als Chipkarte zum Diebstahlschutz oder auch als Telefonnetzkarte ausgeführt sein.

Besonders einfach ist eine Weiterbildung der Erfindung, bei der die Zwischenschicht als eine an der einem Benutzer abgewandten Rückseite der Gerätefront angebrachte Beschichtung ausgeführt ist. Diese ermöglicht eine Anordnung der Zwischenschicht mit lediglich geringem Platzbedarf. Dabei wird die Beschichtung, die hierzu aus einem elektrisch gut leitenden Material besteht, auf die Rückseite der Gerätefront aufgetragen. Es können dadurch auch bereits bekannte Geräte ohne weiteres mit einer entsprechenden Beschichtung ausgestattet werden, ohne dass hierzu weitergehende konstruktive Änderungen erforderlich sind.

Besonders zweckmäßig ist dabei eine Ausführungsform der Erfindung, wenn die Zwischenschicht mit dem Rahmen eines Displays des Einbaugerätes kontaktiert ist. Hierdurch kann die Ableitung der Ladung über das Gehäuse auch im Bereich des Displays, beispielsweise einer Flüssigkristallanzeige, deutlich verbessert werden. Dabei kann der Rahmen insbesondere auch flächig auf der Zwischenschicht aufliegen, um so eine optimale Kontaktierung zu erreichen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine seitliche, teilweise geschnittene Darstellung eines erfindungsgemäßen Einbaugerätes mit seitlich versetzt darge stellter Gerätefront,
- Fig.2: eine Draufsicht auf eine Zwischenschicht des in Figur 1 dargestellten Einbaugerätes.

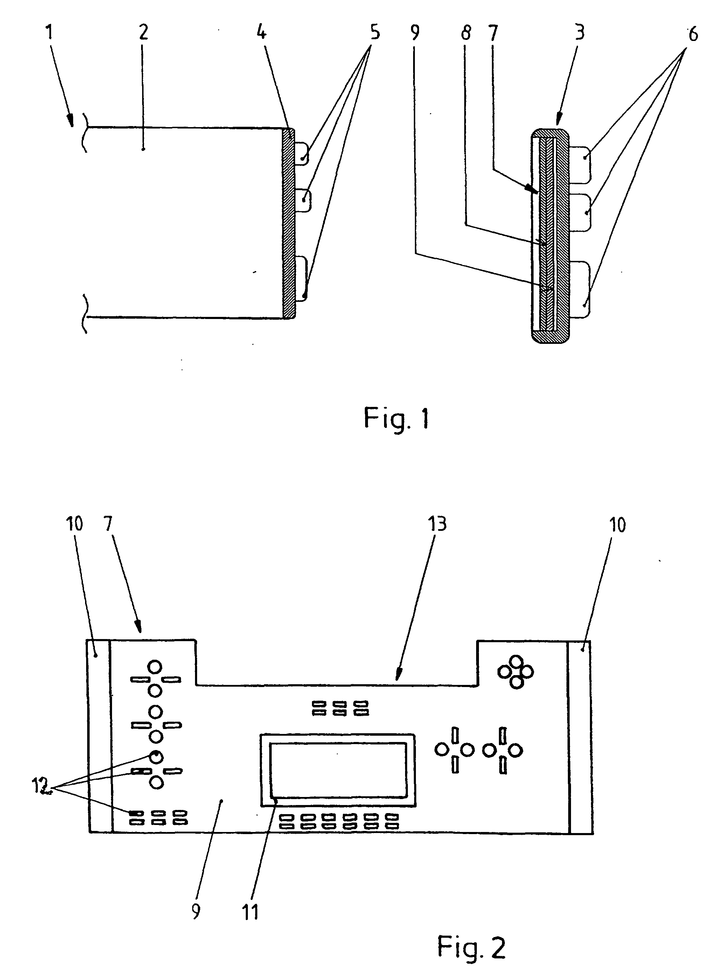

Figur 1 zeigt in einer geschnittenen Seitenansicht ein erfindungsgemäßes Einbaugerät 1 mit einem lediglich abschnittsweise dargestellten Gehäuse 2 und mit einer Gerätefront 3. Das Gehäuse 1 hat vorderseitig einen als Frontprint ausgeführten Träger 4 mit elektrischen Bauelementen 5, insbesondere Schalter und Schaltmatten. Mit den elektrischen Bauelementen 5 wirken entsprechend ausgeführte Bedienelemente 6 zusammen, die an der einem Benutzer zugewandten Vorderseite der Gerätefront 3 angeordnet sind. Mit der Gerätefront 3 verbunden ist eine Zwischenschicht 7, die eine Folie 8 und eine der Gerätefront 3 zugeneigte, elektrisch leitende Beschichtung 9 hat. Durch diese Anordnung kann die elektrostatische Ladung über die direkt hinter der Gerätefront 3 angeordnete Zwischenschicht 7, die hierzu im Betriebszustand mit dem Gehäuse 2 kontaktiert ist, wirkungsvoll über das Gehäuse 2 abgeleitet werden. Zusätzliche Maßnahmen zur Vermeidung eines elektrostatischen Durchschlages und der damit verbundenen möglichen Schädigung elektronischer Bauelemente, beispielsweise IC, im Inneren des Gehäuses 2, insbesondere durch große isolierende Materialstärken der Gerätefront 3, können daher entfallen.

Figur 2 zeigt die in Figur 1 dargestellte Zwischenschicht 7 in einer Draufsicht. Zu erkennen ist dabei die elektrisch leitende Beschichtung 9 der Zwischenschicht 7 und jeweils eine seitlich angebrachte elektrische Kontaktfläche 10 zur Kontaktierung des in Figur 1 dargestellten Gehäuses 2. Eine weitere Kontaktfläche 11 dient der Kontaktierung eines nicht dargestellten Displays. Die Zwischenschicht 7 hat weiterhin unterschiedlich gestaltete Durchbrechungen 12, für die in Figur 1 gezeigten elektrischen Bauelemente 5. Eine als Aussparung ausgeführte Einführöffnung 13 im oberen Rändbereich der Zwischenschicht 7 ermöglicht das Einsetzen von nicht dargestellten Tonträgen oder Speicherkarten.

Nicht dargestellt ist eine der Aussparung entsprechende Beschichtung, die auf einer Vorderseite einer die Aussparung verschließenden Abdeckung angebracht sein kann und die mit dem Massepotential, beispielsweise über die Lager der Abdeckung, verbunden sein kann, wodurch die Ableitung der elektrostatischen Aufladung weiter verbessert wird.

## Patentansprüche

1. Für ein Kraftfahrzeug bestimmtes Einbaugerät, insbesondere Autoradio, mit einem Gerätegehäuse und einer Bedienelemente aufweisenden Gerätefront, wobei das Einbaugerät (1) eine zwischen dem Gehäuse (2) und der Gerätefront (3) angeordnete und mit dem Gehäuse (2) elektrisch kontaktierte Zwischenschicht (7) hat, **dadurch gekennzeichnet, dass** die Zwischenschicht (7) eine Folie (8) hat, wobei die Zwischenschicht (7) Druchbrechungen (12) für elektrische Bauteile (5) hat, oder dass die Zwischenschicht (7) als eine an der einem Benutzer abgewandten Rückseite der Gerätefront (3) angebrachte Beschichtung ausgeführt ist.

2. Einbaugerät nach Anspruch 1, **dadurch gekennzeichnet, dass** die Zwischenschicht (7) ein Formteil ist.

3. Einbaugerät nach Anspruch 1, **dadurch gekennzeichnet, dass** die Folie (8) eine mit einer elektrisch leitenden Beschichtung (9) versehene Kunststofffolie ist.

4. Einbaugerät nach zumindest einem der vorhergehenden Ansprüche, **dadurch gekennzeichnet, dass** die an der Gerätefront (3) angeordneten Bedienelemente (6) zur mechanischen Übertragung der Betätigungskraft auf elektrische Bauelemente (5), die an dem Gehäuse (2) angeordnet sind, ausgeführt sind.

5. Einbaugerät nach zumindest einem der vorhergehenden Ansprüche, **dadurch gekennzeichnet, dass** das Einbaugerät (1) eine mit einer Abdeckung verschließbare Einführöffnung (13) für Informationsträger hat, wobei die Abdeckung rückseitig mit einer elektrisch leitenden Zwischenschicht versehen ist.

6. Einbaugerät nach zumindest einem der vorhergehenden Ansprüche, **dadurch gekennzeichnet, dass** die Zwischenschicht (7) mit dem Rahmen eines Displays des Einbaugerätes (1) kontaktiert ist.

## Claims

1. Built-in device intended for a motor vehicle, in particular a car radio, having a device housing and a device front panel which has control elements, wherein the built-in device (1) has an intermediate layer (7) which is arranged between the housing (2) and the device front panel (3) and makes electrical contact with the housing (2), **characterized in that** the intermediate layer (7) has a film or foil (8), wherein the intermediate layer (7) has apertures (12) for electrical components (5), or **in that** the intermediate layer (7) is in the form of a coating which is applied to the rear face (which faces away from a user) of the device front panel (3).

2. Built-in device according to Claim 1, **characterized in that** the intermediate layer (7) is a shaped part.

3. Built-in device according to Claim 1, **characterized in that** the film or foil (8) is a plastic film which is provided with an electrically conducting coating (9).

4. Built-in device according to at least one of the preceding claims, **characterized in that** the control elements (6) which are arranged on the device front panel (3) are designed to mechanically transmit the operating force to electrical components (5) which are arranged on the housing (2).

5. Built-in device according to at least one of the preceding claims, **characterized in that** the built-in device (1) has an insertion opening (13) for information carriers, which opening can be closed by a cover, the rear face of this cover being provided with an electrically conducting intermediate layer.

6. Built-in device according to at least one of the preceding claims, **characterized in that** the frame of a display of the built-in device (1) makes contact with the intermediate layer (7).

## Revendications

1. Appareil à encastrer, notamment un poste radio, destiné à un véhicule automobile et comportant un boîtier et une platine avant équipée d'éléments de commande, l'appareil à encastrer (1) ayant une couche intermédiaire (7) disposée entre le boîtier (2) et la platine avant (3) et mise en contact électrique avec le boîtier (2), **caractérisé par le fait que** la couche intermédiaire (7) a une feuille mince (8), la couche intermédiaire (7) ayant des évidements (12) pour des composants électriques (5), ou que la couche intermédiaire (7) est exécutée sous la forme d'un revêtement apporté sur la face arrière de la platine avant (3) du côté opposé à un utilisateur.

2. Procédé selon la revendication 1 **caractérisé par le fait que** la couche intermédiaire (7) est une pièce préformée.

3. Procédé selon la revendication 1 **caractérisé par le fait que** la feuille mince (8) est une feuille en matière plastique dotée d'un revêtement (9) conduisant l'électricité.

4. Procédé selon au moins l'une des revendications précédentes **caractérisé par le fait que** les éléments de commande (6) disposés sur la platine avant sont exécutés de telle sorte qu'ils transmettent mécaniquement la force de manoeuvre à des composants électriques qui sont montés sur le boîtier (2).

5. Procédé selon au moins l'une des revendications précédentes **caractérisé par le fait que** l'appareil à encastrer (1) a une ouverture d'introduction (13) pour des supports informatiques pouvant être fermée par un couvercle, le couvercle étant muni, sur sa face arrière d'une couche intermédiaire conduisant l'électricité.

6. Procédé selon au moins l'une des revendications précédentes **caractérisé par le fait que** la couche intermédiaire (7) est en contact électrique avec le cadre d'un écran de l'appareil à encastrer (1).
